(19) **Europäisches Patentamt / European Patent Office / Office européen des brevets**

(11) **EP 3 604 627 A1**

(12) **EUROPEAN PATENT APPLICATION**
published in accordance with Art. 153(4) EPC

(43) Date of publication:
**05.02.2020 Bulletin 2020/06**

(21) Application number: **18770383.0**

(22) Date of filing: **19.03.2018**

(51) Int Cl.:
*C25D 15/02* (2006.01)     *C25D 5/14* (2006.01)
*C25D 5/18* (2006.01)     *C25D 7/00* (2006.01)
*F02F 5/00* (2006.01)     *F16J 9/26* (2006.01)

(86) International application number:
**PCT/JP2018/010728**

(87) International publication number:
**WO 2018/173995 (27.09.2018 Gazette 2018/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.03.2017 JP 2017055764**

(71) Applicant: **Kabushiki Kaisha Riken**
**Chiyoda-ku, Tokyo 102-8202 (JP)**

(72) Inventors:
• **NISHIYAMA Kunihiro**
  **Kashiwazaki-shi**
  **Niigata 945-8555 (JP)**
• **MURAMATSU Gyo**
  **Kashiwazaki-shi**
  **Niigata 945-8555 (JP)**
• **ICHIKAWA Takayuki**
  **Kashiwazaki-shi**
  **Niigata 945-8555 (JP)**

(74) Representative: **SSM Sandmair**
**Patentanwälte Rechtsanwalt**
**Partnerschaft mbB**
**Joseph-Wild-Straße 20**
**81829 München (DE)**

(54) **COMPOSITE CHROME PLATING FILM AND PISTON RING HAVING SAME FILM**

(57)     In order to provide a composite chrome plating film having excellent wear resistance and low aggression against a mating material (sliding member), and a piston ring having the film, hard particles are composited in network-shaped microcracks in a composite chrome plating film, and the crystal orientation of the composite chrome plating film is such that in X-ray diffraction measurement of a coated surface of the composite chrome plating film, the X-ray diffraction intensity $I_{(110)}$ of a Cr (110) plane is the highest, and the ratio ($I_{(110)}/I_{(200)}$) of the $I_{(110)}$ to the X-ray diffraction intensity $I_{(200)}$ of a Cr (200) plane is 9.5 or more.

FIG. 1

EP 3 604 627 A1

**EP 3 604 627 A1**

**Description**

Technical Field

The present invention relates to a composite chrome plating film having network-shaped microcracks containing hard particles, and a piston ring coated with the film.

Background Art

In order to reduce discharge of carbon dioxide, achievement of a new discharge standard as well as high power and low fuel consumption has been recently required in development of engines. In order to achieve the high power, the low fuel consumption, and the discharge standard, the maximum cylinder internal pressure is increased, the combustion temperature is increased, and downsizing of engines is required. For this reason, a piston ring that sufficiently functions even in a severe environment and has a long service life is required.

Specifically, it is desired that the outer periphery of the piston ring be coated with a hard film. In particular, a composite chrome plating film is effectively used for a large piston ring for a marine diesel engine. For composite chrome plating, particles of ceramic such as alumina and silicon nitride are used. The ceramic particles are embedded in a hard chrome matrix during an electrochemical process including reverse electrolysis. In a composite chrome plating film, the scuffing resistance is improved due to the presence of ceramic particles, and at the same time, wear of the film itself and wear of a mating material are reduced as compared with a general chrome plating film.

In development of a future diesel engine, thermal and mechanical loads involved in tribology of an outer peripheral face of a piston ring and an inner peripheral face of a cylinder are surely increased. Finally, a composite chrome plating film containing alumina hard particles also reaches the limit of the load resistance, and the wear resistance is deteriorated in terms of tribology, resulting in scuffing. Therefore, a novel composite chrome plating film that is more excellent than a current composite chrome plating film is required.

Patent Literature 1 teaches a sliding member provided with a composite chrome plating film having net-shaped microcracks containing hard particles. In the composite chrome plating film, the microcracks have a surface-occupying ratio of 10 to 20% by area and a distribution density of 1,200 to 2,500/cm, and the content of the hard particles is 1 to 15% by mass relative to 100% by mass of the whole film. The film is formed on at least a sliding face of a base material of the sliding member. Even when the sliding member configured as described above is worn by sliding, excellent wear resistance and scuffing resistance due to the microcracks, and low aggression against a mating material are held. In particular, Patent Literature 1 teaches that a piston ring is suitable for high-power engines, high-load engines, and the like.

Patent Literature 2 discloses an electrodeposited hard-chrome film for a piston ring that is substantially formed of an electrolyte containing hexavalent chromium, and has cracks in which diamond particles are embedded, the diamond particles having a size ranging from 0.25 to 0.4 $\mu$m. In this film, the ring wear is reduced by half as compared with a conventional composite chrome film containing aluminum oxide particles, and the corrosion resistance is improved by 20%. Further, Patent Literature 2 teaches that even when a large thermal load is applied, a feature is improved by transformation of diamond into graphite.

However, the films are not actually a strong coating in which sufficient wear resistance is achieved in a further severe usage environment where thermal and mechanical loads are increased. Further investigation of a preferable structure of a composite chrome plating film is required.

Citation List

Patent Literature

Patent Literature 1: Japanese Patent No. 4353485
Patent Literature 2: Japanese Patent No. 4406520

Summary of Invention

Technical Problem

In view of such a situation, it is an object of the present invention to provide a composite chrome plating film having excellent wear resistance and low aggression against a mating material (sliding member), and a piston ring having the film. Solution to Problem

2

In order to achieve the above-described object, the present inventors have intensively studied about a composite chrome plating film, and as a result, succeeded to obtain a composite chrome plating film having excellent wear resistance and low aggression against a mating material (sliding member) by compositing hard particles and adjusting the crystal orientation of the composite chrome plating film to a predetermined range. Thus, the present invention has been accomplished.

Specifically, a composite chrome plating film of the present invention is a composite chrome plating film having network-shaped microcracks containing hard particles, and is characterized in that in X-ray diffraction measurement of a coated surface of the composite chrome plating film, the X-ray diffraction intensity $I_{(110)}$ of a Cr (110) plane is the highest, and the ratio ($I_{(110)}/I_{(200)}$) of the $I_{(110)}$ to the X-ray diffraction intensity $I_{(200)}$ of a Cr (200) plane is 9.5 or more. It is preferable that the ratio ($I_{(110)}/I_{(310)}$) of the $I_{(110)}$ to the X-ray diffraction intensity $I_{(310)}$ of a Cr (310) plane is 27.0 or more.

Furthermore, the texture coefficient $TC_{(110)}$ of the Cr (110) plane is preferably 1.2 to 2.5, the ratio ($TC_{(110)}/TC_{(200)}$) of the $TC_{(110)}$ to the texture coefficient $TC_{(200)}$ of the Cr (200) plane is preferably 1.6 to 2.8, and the ratio ($TC_{(110)}/TC_{(310)}$) of the $TC_{(110)}$ to the texture coefficient $TC_{(310)}$ of the Cr (310) plane is preferably 5.2 to 8.0.

The hard particles preferably include alumina particles, and the content thereof is preferably 0.5 to 10% by mass.

The hard particles preferably include diamond particles, and the content thereof is preferably 0.5 to 2.5% by mass.

The hardness of a chrome plating matrix is preferably 800 to 1,100 HV0.05.

The microcracks preferably have a distribution density of 600 to 1,900 pieces/cm.

The composite chrome plating film preferably includes at least two composite chrome plating layers.

The piston ring of the present invention is characterized in that the aforementioned composite chrome plating film is formed at least on a sliding face thereof.

Advantageous Effects of Invention

The composite chrome plating film of the present invention exhibits excellent wear resistance since a surface of the film is preferentially oriented to the Cr (110) plane where atoms are most densely present. Further, the microcracks of the composite chrome plating film contain the hard particles, have an opening width that is maintained constant, and function as a lubrication oil pocket, so that the aggression against a mating material can be reduced. Accordingly, it is possible that the composite chrome plating film of the present invention acts as a strong composite chrome plating film even in a severe usage environment where the thermal and mechanical loads are increased, achieves low fuel consumption, and satisfies the new discharge standard.

Brief Description of Drawings

FIG. 1 is a diagram illustrating an X-ray diffraction pattern of a composite chrome plating film of Example 1.
FIG. 2 is a diagram illustrating a secondary electron image of a plane parallel to a coated surface of the composite chrome plating film of Example 1 by scanning electron microscopy.
FIG. 3 is a diagram illustrating an X-ray diffraction pattern of a composite chrome plating film of Comparative Example 1.
FIG. 4 is a schematic diagram of a wear testing machine.

Description of Embodiments

A composite chrome plating film of the present invention is composite chrome plating having network-shaped microcracks containing hard particles, wherein in X-ray diffraction measurement of a coated surface of the composite chrome plating film, the X-ray diffraction intensity $I_{(110)}$ of a Cr (110) plane is the highest, and the ratio ($I_{(110)}/I_{(200)}$) of the $I_{(110)}$ to the X-ray diffraction intensity $I_{(200)}$ of a Cr (200) plane is 9.5 or more. Specifically, when in a crystal structure of a chrome plating film constructing a matrix in the present invention, the Cr (110) plane where atoms are most densely present is oriented and grown, the wear resistance of the matrix is improved. In the present invention, the degree of orientation is evaluated from the ratio ($I_{(110)}/I_{(200)}$) of the X-ray diffraction intensity $I_{(110)}$ of the Cr (110) plane to the X-ray diffraction intensity $I_{(200)}$ of the Cr (200) plane. As a result, when the ratio ($I_{(110)}/I_{(200)}$) is less than 9.5, the wear resistance of the composite chrome plating film is insufficient. Therefore, the ratio ($I_{(110)}/I_{(200)}$) is 9.5 or more. The ratio ($I_{(110)}/I_{(200)}$) is more preferably 12 or more, and further preferably 13 or more. It is not necessary to particularly define an upper limit, but an upper limit that is obtained without particular difficulty is preferably 18. When the degree of orientation is evaluated from the ratio ($I_{(110)}/I_{(310)}$) of the X-ray diffraction intensity $I_{(110)}$ of the Cr (110) plane to the X-ray diffraction intensity $I_{(310)}$ of the Cr (310) plane, the ratio ($I_{(110)}/I_{(310)}$) is preferably 27.0 or more, and more preferably 29.0 or more.

Furthermore, in the present invention, the texture coefficient $TC_{(110)}$ of the Cr (110) plane is preferably 1.2 to 2.5. The $TC_{(110)}$ is preferably 1.25 to 2.3, and more preferably 1.3 to 2.2. When the texture coefficient of the Cr (200) plane is $TC_{(200)}$, the ratio ($TC_{(110)}/TC_{(200)}$) of $TC_{(110)}$ to $TC_{(200)}$ is preferably 1.6 to 2.8. The ratio ($TC_{(110)}/TC_{(200)}$) is preferably 1.8 to 2.7, and more preferably 1.9 to 2.6. When the texture coefficient of the Cr (310) plane is $TC_{(310)}$, the ratio ($TC_{(110)}/TC_{(310)}$) of $TC_{(110)}$ to $TC_{(310)}$ is preferably 5.2 to 8.0. The ratio ($TC_{(110)}/TC_{(310)}$) is preferably 5.4 to 7.6, and more preferably 5.6 to 7.2.

Herein, the texture coefficient $TC_{(hkl)}$ of a (hkl) plane is generally defined by:

$$TC_{(hkl)} = I_{(hkl)}/I_{0(hkl)} \cdot [(1/n) \cdot \Sigma (I_{(hkl)}/I_{0(hkl)})]^{-1} \quad (1).$$

$I_{(hkl)}$ refers to the measured X-ray diffraction intensity of the (hkl) plane (the intensity is converted relative to a maximum X-ray diffraction intensity measured of 100), and $I_{0(hkl)}$ refers to a standard X-ray diffraction intensity described in JCPDS file No. 06-0694. JCPDS File No. 06-0694 describes standard X-ray diffraction intensities of six types of (hkl) planes (110), (200), (211), (220), (310), and (222), and in the present invention, are defined by:

$$TC_{(hkl)} = I_{(hkl)}/I_{0(hkl)} \cdot [1/6 \cdot [I_{(110)}/I_{0(110)} + I_{(200)}/I_{0(200)} + I_{(211)}/I_{0(211)} + I_{(220)}/I_{0(220)}$$

$$+ I_{(310)}/I_{0(310)} + I_{(222)}/I_{0(222)}]]^{-1} \ldots (2).$$

It should be noted that $I_{0(111)}$ is 100, $I_{0(200)}$ is 16, $I_{0(211)}$ is 30, $I_{0(220)}$ is 18, $I_{0(310)}$ is 20, and $I_{0(222)}$ is 6.

In the present invention, preferred orientation to the Cr (110) plane of a hard chrome plating layer is closely involved with a plating bath composition and a heat treatment temperature of 250°C to 400°C after film formation.

The composite chrome plating film of the present invention has network-shaped microcracks containing hard particles. It is preferable that the hard particles include alumina particles or diamond particles. Of cause, it is preferable that the hard particles include both alumina particles and diamond particles. The diamond particles are more rigid and have higher hardness than the alumina particles and other particles. In particular, in a case of single-crystal diamond particles, the wear resistance of the composite chrome plating film is significantly improved. However, there is a problem in which as the size of the particles is larger, the aggression against a mating material is increased. Therefore, it is preferable that the diamond particles have a median diameter of 0.1 to 1.0 $\mu$m. The median diameter is more preferably 0.2 to 0.8 $\mu$m, and further preferably 0.3 to 0.6 $\mu$m. The median diameter is also preferably 0.5 to 1.0 $\mu$m. The content of the diamond particles is preferably 0.5 to 2.5% by mass relative to the whole plating film. The content is more preferably 0.5 to 2.0% by mass, and further preferably 0.5 to 1.5% by mass.

On the other hand, since the aggression of the alumina particles against a mating material is lower than that of the diamond particles, the alumina particles having a particle diameter lager than the diamond particles can be used as the hard particles. It is preferable that the alumina particles have a median diameter of 1.0 to 4.0 $\mu$m. The median diameter is more preferably 2.0 to 3.0 $\mu$m. The content of the alumina particles is preferably 0.5 to 10.0% by mass relative to the whole plating film. The content is more preferably 1.0 to 8.0% by mass, further preferably 2.0 to 6.0% by mass, and the most preferably 2.5 to 5.5% by mass.

In the composite chrome plating film of the present invention, the hardness of a chrome plating matrix at a region without microcracks is preferably 800 to 1,100 HV0.05. Herein, hardness symbol HV0.05 represents a micro Vickers hardness at a test force of 0.49 N (50 g). In general, an oriented and grown plating film has increased film stress and increased film hardness. However, in the present invention, the film stress is released by introduction of the network-shaped microcracks, and an increase in film hardness is suppressed. The hardness of the matrix is more preferably 865 to 985 HV0.05, and further preferably 880 to 970 HV0.05.

When the hard chrome plating layer having a predetermined thickness is deposited and then subjected to reverse electrolysis, the network-shaped microcracks are introduced and extended. Into the microcracks that are opened during this reverse electrolysis, the hard particles dispersed in a chrome plating bath are put. Thus, a composite chrome plating film containing the hard particles can be formed. When the reverse electrolysis is stopped, the opened microcracks are tried to be closed. However, closure of the microcracks is restricted due to the presence of the hard particles introduced, and a predetermined opening width is held. Thus, the microcracks opened on the film surface function as an effective lubrication oil pocket, to improve sliding properties. From this viewpoint, the size of the hard particles is closely involved with the opening width of the microcracks, and the alumina particles having a particle diameter larger than the diamond particles are effective in reduction of aggression against a mating material.

From the viewpoint of the microcracks opened on the film surface that function as an effective lubrication oil pocket, it is preferable that the composite chrome plating film of the present invention have a microcrack distribution density of 600 to 1,900 pieces/cm. The distribution density is more preferably 600 to 1,200 pieces/cm, and further preferably 600 to 1,000 pieces/cm.

It is preferable that in the composite chrome plating film having the network-shaped microcracks containing the hard particles, for example, many composite chrome plating layers having a thickness of about 10 to 25 $\mu$m be stacked.

When the composite chrome plating film of the present invention is used particularly at an outer peripherical sliding face of a piston ring for an internal combustion engine, properties including excellent wear resistance and low aggression against a mating material are effectively exerted.

Examples

Example 1

[1] Plating Bath

As a hard chrome plating bath, a plating bath containing 250 g/L of chromic acid ($CrO_3$), 1 g/L of sulfuric acid ($H_2SO_4$), 3.0 g/L of hexafluorosilicic acid ($H_2SiF_6$), 20 mL/L of HEEF-25C (Atotech), 500 ppm (by mass) of anionic surfactant (FTERGENT 110), and 150 g/L of alumina particles (median diameter: 2.1 $\mu$m) was prepared.

[2] Piston Ring Base Material and Pretreatment

Subsequently, a piston ring base material for a top ring made of a spheroidal graphite cast iron having a polished outer peripheral sliding face was prepared. Ten piston rings were stacked into a cylindrical shape, a jig was fixed so that the outer peripheral sliding face of the rings constituted the cylindrical outer peripheral face, and they were immersed in the hard chrome plating bath. The electrolyte temperature was adjusted to 60°C, and a pretreatment was performed by flowing current using the piston rings as an anode and a counter electrode as a cathode at a current density of 30 $A/dm^2$ for 10 seconds.

[3] Formation of Base Film

After the pretreatment of the piston ring base material, the polarity was reversed (i.e., the piston rings were used as a cathode and the counter electrode was used as an anode), and a plating treatment was performed at a current density of 20 $A/dm^2$ for 20 minutes, to form a hard chrome plating film as a base film.

[4] Formation of Multi-Layer Composite Chrome Plating Film

After the formation of the base film, a plating treatment was performed at a current density of 55 $A/dm^2$ for 25 minutes, to form a first chrome plating layer, and the polarity was then reversed again (i.e., the piston rings were used as an anode and the counter electrode was used as a cathode). Reverse electrolysis was performed at a current density of 55 $A/dm^2$ for 3 minutes to introduce and extend microcracks. The hard particles including the alumina particles dispersed in the plating bath were put into the microcracks. A cycle including the plating treatment and the reverse electrolysis was repeated 15 times in total. As a result, a multi-layer composite chrome plating film of about 270 $\mu$m in which 15 layers each having a layer thickness of about 18 $\mu$m were stacked was formed.

[5] Thermal Treatment

The piston rings provided with the multi-layer composite chrome plating film were washed with water, and subjected to a thermal treatment at 250°C for 90 minutes.

[6] Evaluation of Multi-Layer Composite Chrome Plating Film

For the multi-layer composite chrome plating film, the X-ray diffraction of the coated surface, the hardness of a chrome plating matrix, the distribution density of the microcracks formed into a network shape, and the content of the hard particles were measured and evaluated.

[6-1] X-ray Diffraction Measurement

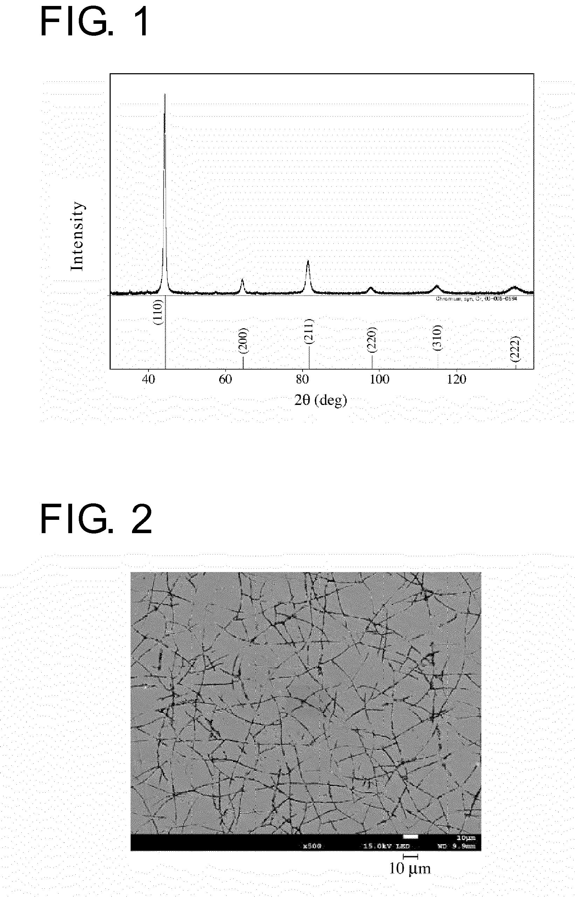

The X-ray diffraction intensity of a mirror-polished surface parallel to the coated surface was measured with a Cu-K$\alpha$ ray at an X-ray tube voltage of 40 kV and a tube current of 30 mA within a range of 2$\theta$ of 30 to 140° covering the diffraction positions of (110), (200), (211), (220), (310), and (222) planes of Cr. An X-ray diffraction profile obtained in Example 1 is shown in FIG. 1. The maximum intensity among six diffraction intensities was assumed to be 100, the diffraction intensity of each of the (110), (200), (211), (220), (310), and (222) planes was converted, and the ratio $(I_{(110)}/I_{(200)})$ of the diffraction intensity $I_{(110)}$ of the (110) plane to the diffraction intensity $I_{(200)}$ of the (200) plane, the ratio $(I_{(110)}/I_{(310)})$ of the diffraction intensity $I_{(110)}$ of the (110) plane to the diffraction intensity $I_{(310)}$ of the (310) plane, the texture coefficient $TC_{(110)}$ of the (110) plane, the ratio $(TC_{(110)}/TC_{(200)})$ of the texture coefficient $TC_{(110)}$ of the (110) plane to the texture coefficient $TC_{(200)}$ of the (200) plane, and the ratio $(TC_{(110)}/TC_{(310)})$ of the texture coefficient $TC_{(110)}$ of the (110) plane to the texture coefficient $TC_{(310)}$ of the (310) plane were determined. In Example 1, $I_{(110)}/I_{(200)}$ was 12.6, $I_{(110)}/I_{(310)}$ was 31.8, $TC_{(110)}$ was 1.2, $TC_{(110)}/TC_{(200)}$ was 2.0, and $TC_{(110)}/TC_{(310)}$ was 6.4.

[6-2] Content of Hard Particles

In general, the content of the hard particles may be determined by quantitatively analyzing the film surface with an X-ray fluorescence analyzer, and calculating a ratio (% by mass) of the hard particles from the quantitatively measured ratio of each element. The content of the alumina particles measured with X ray fluorescence analysis was 2.9%.

[6-3] Hardness

In measurement of hardness of the chrome plating matrix, a micro Vickers hardness tester was used. The measurement was performed at a test force of 0.49 N (50 g) for a matrix between microcracks on the mirror-polished surface parallel to the coated surface. The hardnesses at five points were measured, the hardnesses at three points except for the maximum and minimum measured hardnesses were averaged, and the average was used as a value of hardness. In Example 1, the hardness of the chrome plating matrix was 892 HV0.05.

[6-4] Distribution Density of Microcracks

FIG. 2 shows a secondary electron image of a plane parallel to the coated surface of the composite chrome plating film of Example 1 with a scanning electron microscope (SEM), and shows that the microcracks are distributed in a network shape. The distribution density (pieces/cm) of the network-shaped microcracks may be determined by optionally drawing five straight lines with a length of 10 cm on the SEM photograph obtained at an area magnification of $10\times10$, counting the numbers of intersections of the straight lines and the microcracks, and averaging them. In Example 1, the distribution density of the microcracks was 995 pieces/cm.

[7] Wear Test

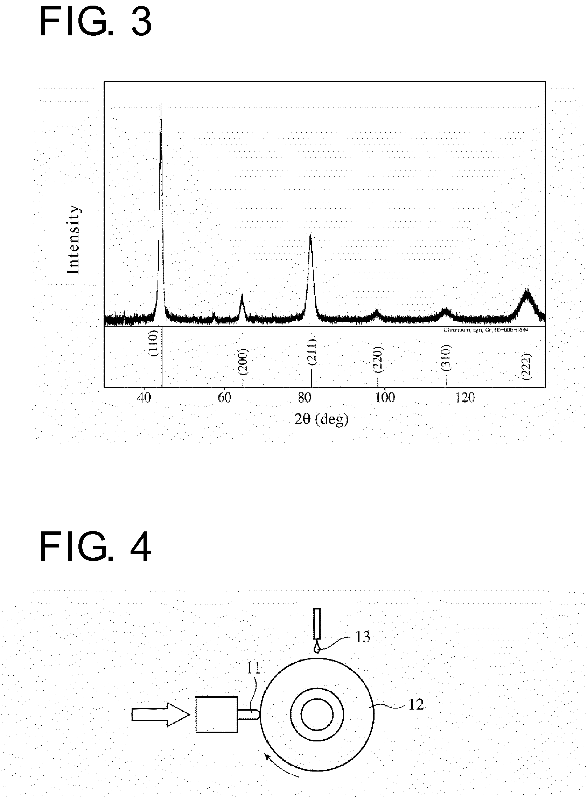

For evaluation of wear resistance and aggression against a mating material of the film, a wear test was performed. A schematic diagram of a wear testing machine is shown in FIG. 4. In the wear test, a test piece of the piston ring having the composite chrome plating film that was a test piece (11) was brought into contact with an FC250 material processed into a drum shape that was a mating material (12) so that a ring shaft was parallel to a drum shaft, and the drum was rotated at a peripheral speed of 0.5 m/sec for 4 hours with a load of 490 N applied to the test piece. As a lubricating oil (13), SAE#30 was supplied at 0.15 mL/min, and the mating material (12) was heated so that the surface temperature thereof was 180°C. Among the test results, the wear of the film was evaluated as wear depth, and the wear of the mating material was evaluated as a wear area of a cross section determined by observation of a cross section profile. In Example 1, the wear depth of the film was 1.1 $\mu$m, and the wear amount of the mating material was $3 \times 10^{-4}$ cm$^2$.

Example 2

A piston ring coated with a multi-layer composite chrome plating film was produced in the same manner as that in Example 1 except that 30 g/L of diamond particles (median diameter: 0.5 $\mu$m) were further added to the plating bath used in Example 1. For the obtained piston ring, evaluations of the film were performed in the same manner as that in Example 1. The content of the diamond particles was measured by peeling the composite chrome plating film from the outer peripheral face of the piston ring followed by carbon and sulfur analysis. This is because analysis of carbon, which is a light element, can be performed with more accuracy by carbon and sulfur analysis as compared with X ray fluorescence analysis. Herein, it is necessary that for a composite chrome plating film containing no diamond particles, the carbon content is measured in the same manner as a background amount and correction is performed.

Example 3

A piston ring coated with a multi-layer composite chrome plating film was produced in the same manner as that in Example 1 except that the heat treatment temperature was 400°C for 90 minutes after formation of the multi-layer composite chrome plating film. For the obtained piston ring, evaluations of the film were performed in the same manner as that in Example 1.

Example 4

A piston ring coated with a multi-layer composite chrome plating film was produced in the same manner as that in Example 1 except that 45 g/L of diamond particles (median diameter: 0.6 $\mu$m) were further added to the plating bath used in Example 1. For the obtained piston ring, evaluations of the film were performed in the same manner as that in Example 1.

Comparative Example 1

The plating bath having the same composition as that in Example 1 was prepared as a hard chrome plating bath except that it did not contain HEEF-25C, and a piston ring coated with a multi-layer composite chrome plating film was produced in the same manner as that in Example 1. The heat treatment had not been performed. For the obtained piston ring, evaluations of the film were performed in the same manner as that in Example 1.

Comparative Example 2

The plating bath having the same composition as that in Example 4 was prepared as a hard chrome plating bath except that it did not contain HEEF-25C, and a piston ring coated with a multi-layer composite chrome plating film was produced in the same manner as that in Example 4. The heat treatment had not been performed. For the obtained piston ring, evaluations of the film were performed in the same manner as that in Example 4.

Tables 1 and 2 show the evaluation results of Examples 2 to 4 and Coating Examples 1 and 2, including the results of Example 1.

[Table 1]

|  | Diffraction Intensity | | Texture Coefficient | | |
|---|---|---|---|---|---|
|  | $I_{(110)}/I_{(200)}$ | $I_{(110)}/I_{(310)}$ | $TC_{(110)}$ | $TC_{(110)}/TC_{(200)}$ | $TC_{(110)}/TC_{(310)}$ |
| Example 1 | 12.6 | 31.8 | 1.2 | 2.0 | 6.4 |
| Example 2 | 15.9 | 33.1 | 1.6 | 2.6 | 6.6 |
| Example 3 | 12.6 | 29.4 | 2.0 | 2.0 | 5.9 |
| Example 4 | 14.0 | 35 | 1.3 | 2.2 | 7.0 |
| Comparative Example 1 | 9.0 | 21.1 | 1.0 | 1.4 | 4.2 |
| Comparative Example 2 | 7.8 | 25.6 | 1.1 | 1.3 | 5.1 |

[Table 2]

|  | Content of Hard Particles (%) | | Hardness HV0.05 | Distribution Density of Microcracks (pieces/cm) | Wear Amount | |
|---|---|---|---|---|---|---|
|  | Alumina | Diamond |  |  | Film Itself ($\mu$m) | Mating Material ($10^{-4}$ cm$^2$) |
| Example 1 | 2.9 | - | 892 | 995 | 1.1 | 3.0 |
| Example 2 | 2.5 | 1.4 | 944 | 1060 | 1.3 | 2.8 |
| Example 3 | 3.1 | - | 813 | 925 | 1.4 | 2.5 |
| Example 4 | 2.6 | 2.1 | 870 | 678 | 1.6 | 3.4 |

(continued)

| | Content of Hard Particles (%) | | Hardness HV0.05 | Distribution Density of Microcracks (pieces/cm) | Wear Amount | |
| --- | --- | --- | --- | --- | --- | --- |
| | Alumina | Diamond | | | Film Itself ($\mu$m) | Mating Material ($10^{-4}$ $cm^2$) |
| Comparative Example 1 | 3.3 | - | 984 | 764 | 2.3 | 8.1 |
| Comparative Example 2 | 2.7 | 2.5 | 1014 | 655 | 2.5 | 6.9 |

Examples 5 to 13

A piston ring coated with a multilayer composite chrome plating film was produced in the same manner as that in Example 1 except that the amount of the same alumina particles used in Example 1 was changed in the same plating bath as that in Example 1 except for the alumina particles, for Examples 5 to 13, respectively, to 60 g/L (Example 5), 90 g/L (Example 6), 120 g/L (Example 7), 130 g/L (Example 8), 150 g/L (Example 9 ≈ Example 1), 180 g/L (Example 10), 210 g/L (Example 11), 270 g/L (Example 12), and 400 g/L (Example 13). For the obtained piston ring, the content of the hard (alumina) particles, Vickers hardness, and distribution density of the microcracks of the multilayer composite chromium plating film were measured, and a wear test was performed in the same manner as that in Example 1. Table 3 shows the results.

[Table 3]

| | Content of Hard Particles (Alumina) (%) | Hardness HV0.05 | Distribution Density of Microcracks (pieces/cm) | Wear Amount | |
| --- | --- | --- | --- | --- | --- |
| | | | | Film Itself ($\mu$m) | Mating Material ($10^{-4}$ $cm^2$) |
| Example 5 | 1.3 | 865 | 821 | 4.9 | 2.6 |
| Example 6 | 1.8 | 813 | 804 | 3.4 | 2.4 |
| Example 7 | 2.1 | 863 | 846 | 1.3 | 2.9 |
| Example 8 | 2.6 | 881 | 893 | 1.5 | 2.7 |
| Example 9 | 3.1 | 922 | 934 | 1.7 | 3.0 |
| Example 10 | 3.7 | 917 | 781 | 1.2 | 3.3 |
| Example 11 | 4.2 | 891 | 687 | 1.6 | 2.8 |
| Example 12 | 5.4 | 963 | 1083 | 1.4 | 2.4 |
| Example 13 | 8.2 | 944 | 876 | 2.9 | 6.7 |

Reference Signs List

8

1        Microcracks

11       Test piece

12       Mating material (Drum)

13       Lubricating oil

**Claims**

1. A composite chrome plating film having network-shaped microcracks containing hard particles, wherein in X-ray diffraction measurement of a coated surface of the composite chrome plating film, an X-ray diffraction intensity $I_{(110)}$ of a Cr (110) plane is the highest, and a ratio ($I_{(110)}/I_{(200)}$) of the $I_{(110)}$ to an X-ray diffraction intensity $I_{(200)}$ of a Cr (200) plane is 9.5 or more.

2. The composite chrome plating film according to claim 1, wherein a ratio ($I_{(110)}/I_{(310)}$) of the $I_{(110)}$ to an X-ray diffraction intensity $I_{(310)}$ of a Cr (310) plane is 27.0 or more.

3. The composite chrome plating film according to claim 1 or 2, wherein a texture coefficient $TC_{(110)}$ of the Cr (110) plane is 1.2 to 2.5.

4. The composite chrome plating film according to claim 3, wherein a ratio ($TC_{(110)}/TC_{(200)}$) of the $TC_{(110)}$ to a texture coefficient $TC_{(200)}$ of the Cr (200) plane is 1.6 to 2.8.

5. The composite chrome plating film according to claim 3 or 4, wherein a ratio ($TC_{(110)}/TC_{(310)}$) of the $TC_{(110)}$ to a texture coefficient $TC_{(310)}$ of the Cr (310) plane is 5.2 to 8.0.

6. The composite chrome plating film according to any one of claims 1 to 5, wherein the hard particles include alumina particles.

7. The composite chrome plating film according to claim 6, wherein a content of the alumina particles is 0.5 to 10% by mass.

8. The composite chrome plating film according to any one of claims 1 to 7, wherein the hard particles include diamond particles.

9. The composite chrome plating film according to claim 8, wherein a content of the diamond particles is 0.5 to 2.5% by mass.

10. The composite chrome plating film according to any one of claims 1 to 9, wherein a hardness of a chrome plating matrix is 800 to 1,100 HV0.05.

11. The composite chrome plating film according to any one of claims 1 to 10, wherein the microcracks have a distribution density of 600 to 1,900 pieces/cm.

12. The composite chrome plating film according to any one of claims 1 to 11, wherein the composite chrome plating film includes at least two composite chrome plating layers.

13. A piston ring comprising the composite chrome plating film according to any one of claims 1 to 12 formed at least on a sliding face thereof.

# FIG. 1

# FIG. 2

# FIG. 3

# FIG. 4

## INTERNATIONAL SEARCH REPORT

| International application No. |
|---|
| PCT/JP2018/010728 |

### A. CLASSIFICATION OF SUBJECT MATTER

Int.Cl. C25D15/02(2006.01)i, C25D5/14(2006.01)i, C25D5/18(2006.01)i, C25D7/00(2006.01)i, F02F5/00(2006.01)i, F16J9/26(2006.01)i

According to International Patent Classification (IPC) or to both national classification and IPC

### B. FIELDS SEARCHED

Minimum documentation searched (classification system followed by classification symbols)
Int.Cl. C25D15/02, C25D5/14, C25D5/18, C25D7/00, F02F5/00, F16J9/26

Documentation searched other than minimum documentation to the extent that such documents are included in the fields searched

|  |  |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2013-241656 A (NIPPON CHEMICAL INDUSTRIAL CO., LTD.) 05 December 2013, claims, paragraphs [0013]-[0057], example 3 & WO 2013/176149 A1 | 1-13 |
| A | WO 2012/091047 A1 (NIPPON PISTON RING CO., LTD.) 05 July 2012, claims, paragraphs [0025]-[0058] & EP 2660362 A1, claims, paragraphs [0025]-[0077] & KR 10-2013-0087559 A & CN 103403229 A | 1-13 |

☒ Further documents are listed in the continuation of Box C.   ☐ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07.05.2018 | 22.05.2018 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2018/010728

C (Continuation). DOCUMENTS CONSIDERED TO BE RELEVANT

| Category* | Citation of document, with indication, where appropriate, of the relevant passages | Relevant to claim No. |
|---|---|---|
| A | WO 2005/073437 A1 (RIKEN KK) 11 August 2005, claims, paragraphs [0018]-[0037] & US 2006/0040124 A1, claims, paragraphs [0040]-[0064] & EP 1719827 A1 & KR 10-2006-0041151 A & CN 1764745 A & RU 2006131135 A & TW 200530498 A | 1-13 |
| A | JP 10-130892 A (TEIKOKU PISTON RING CO., LTD.) 19 May 1998, claims (Family: none) | 1-13 |
| A | JP 7-166393 A (TEIKOKU PISTON RING CO., LTD.) 27 June 1995, claims, examples (Family: none) | 1-13 |
| A | JP 2007-291423 A (MAZDA MOTOR) 08 November 2007, claim 1, paragraphs [0008]-[0010], [0024], examples (Family: none) | 1-13 |
| A | JP 2006-219756 A (MAZDA MOTOR) 24 August 2006, claims & US 2006/0151329 A1, claims & EP 1681376 A1 | 1-13 |

Form PCT/ISA/210 (continuation of second sheet) (January 2015)

**REFERENCES CITED IN THE DESCRIPTION**

**Patent documents cited in the description**

- JP 4353485 B

- JP 4406520 B